(19) **Europäisches Patentamt**
**European Patent Office**
**Office européen des brevets**

(11) **EP 4 614 271 A1**

(12) **EUROPÄISCHE PATENTANMELDUNG**

(43) Veröffentlichungstag:
**10.09.2025   Patentblatt 2025/37**

(21) Anmeldenummer: **24161072.4**

(22) Anmeldetag: **04.03.2024**

(51) Internationale Patentklassifikation (IPC):
**G05D 1/24** *(2024.01)*

(52) Gemeinsame Patentklassifikation (CPC):
**G05D 1/245; G05D 1/696;** G05D 2101/15;
G05D 2107/70; G05D 2109/16; G05D 2111/54;
G05D 2111/58

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Bachmann, Christian**
**80686 München (DE)**
• **Bergmann, Dominik**
**83679 Sachsenkam (DE)**
• **Pais, Guillaume**
**81667 München (DE)**
• **Röhrl, Verena**
**85301 Schweitenkirchen (DE)**

(74) Vertreter: **Siemens Patent Attorneys**
**Postfach 22 16 34**
**80506 München (DE)**

(54) **VERFAHREN ZUM BESTIMMEN EINES RADSCHLUPFES VON ZUMINDEST EINEM RAD EINER ROBOTERANORDNUNG MITTELS EINER POSITIONSBESTIMMUNGSVORRICHTUNG, COMPUTERPROGRAMMPRODUKT, COMPUTERLESBARES SPEICHERMEDIUM SOWIE POSITIONSBESTIMMUNGSVORRICHTUNG**

(57)    Die Erfindung betrifft ein Verfahren zum Bestimmen eines Radschlupfes einer Roboteranordnung (10), mit den Schritten: Erfassen eines ersten Radwinkels eines ersten Rads (22) eines ersten Roboterteils (12) der Roboteranordnung (10) mittels eines ersten Radwinkelsensors (26); Erfassen eines zweiten Radwinkels eines zweiten Rads (24) des ersten Roboterteils (12) mittels eines zweiten Radwinkelsensors (28); Erfassen eines dritten Radwinkels eines dritten Rads (30) eines zweiten Roboterteils (16) der Roboteranordnung (10) mittels eines dritten Radwinkelsensors (32), wobei der erste Roboterteil (12) und der zweite Roboterteil (16) über ein Gelenk (14) miteinander verbunden sind; Erfassen eines vierten Radwinkels eines vierten Rads (34) des zweiten Roboterteils (16) mittels eines vierten Radwinkelsensors (36); Übermitteln der erfassten Radwinkel an eine elektronische Recheneinrichtung (38) der Positionsbestimmungsvorrichtung (42); und Bestimmen eines Radschlupfes an einem der vier Räder (22, 24, 30, 34) durch Verifizieren der erfassten Radwinkel. Ferner betrifft die Erfindung ein Computerprogrammprodukt, ein computerlesbares Speichermedium sowie eine Positionsbestimmungsvorrichtung (42).

FIG 1

EP 4 614 271 A1

**Beschreibung**

Die nachfolgende Erfindung betrifft ein Verfahren zum Bestimmen eines Radschlupfes von zumindest einem Rad einer Roboteranordnung mittels einer Positionsbestimmungsvorrichtung. Ferner betrifft die Erfindung ein entsprechendes Computerprogrammprodukt, ein entsprechendes computerlesbares Speichermedium sowie eine entsprechende Positionsbestimmungsvorrichtung.

Basis für die Navigation von mobilen Robotern im Raum ist beispielsweise die aktuelle Position des Roboters. Diese wird typischerweise aus einer Kombination der zurückgelegten Strecke anhand der Radumdrehungen und einer Absolutreferenz im Weltkoordinatensystem, beispielsweise durch magnetische, induktive oder optische Marker, ermittelt.

Die Bestimmung der Position aus den Radumdrehungen bei bekannter Fahrzeuggeometrie nennt sich Odometrie. Die Messrate der Odometrie ist im Vergleich zu der Bestimmung der Absolutreferenz ehr hoch, hat aber das Problem, dass sich Fehler im Laufe des Betriebs immer weiter aufsummieren, da es sich um eine inkrementelle Messung handelt. Mögliche Ursachen für den Fehler sind beispielsweise die ungenauen Raddurchmesser und Geometrie des Fahrzeugs, und bekannten Reibpaarung zwischen Reifen und Untergrund, sowie der Radschlupf.

Je besser und zuverlässiger die Odometrie funktioniert, umso besser/länger kann ein autonomes Fahrzeug auch ohne Absolutreferenz betrieben werden.

Bei insbesondere autonomen mobilen Robotern, sogenannten AGVs, wird die Odometrie aufwendig bei der Inbetriebnahme kalibriert. Eventuelle Abnutzung der Räder können nur durch regelmäßige Rekalibrierung kompensiert werden.

Aufgabe der vorliegenden Erfindung ist es, ein Verfahren, ein Computerprogrammprodukt, ein computerlesbares Speichermedium sowie eine Positionsbestimmungsvorrichtung zu schaffen, mittels welchen eine zuverlässige Positionsbestimmung für eine Roboteranordnung realisiert werden kann.

Diese Aufgabe wird durch ein Verfahren, ein Computerprogrammprodukt, ein computerlesbares Speichermedium sowie eine Positionsbestimmungsvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen eines Radschlupfes von zumindest einem Rad einer Roboteranordnung mittels einer Positionsbestimmungsvorrichtung.

Es wird ein erster Radwinkel eines ersten Rads eines ersten Roboterteils der Roboteranordnung mittels eines ersten Radwinkelsensors der Positionsbestimmungsvorrichtung erfasst. Es wird ein zweiter Radwinkel eines zweiten Rads des ersten Roboterteils mittels eines zweiten Radwinkelsensors der Positionsbestimmungsvorrichtung erfasst. Es wird ein dritter Radwinkel eines dritten Rads eines zweiten Roboterteils der Roboteranordnung mittels eines dritten Radwinkelsensors der Positionsbestimmungsvorrichtung erfasst, wobei der erste Roboterteil und der zweite Roboterteil über ein Gelenk miteinander verbunden sind. Es wird ein vierter Radwinkel eines vierten Rads des zweiten Roboterteils der Roboteranordnung mittels eines vierten Radwinkelsensors der Positionsbestimmungsvorrichtung erfasst. Es erfolgt das Übermitteln der erfassten Radwinkel an eine elektronische Recheneinrichtung der Positionsbestimmungsvorrichtung und das Bestimmen eines Radschlupfes an einem der vier Räder durch gegenseitiges Verifizieren der erfassten Radwinkel relativ zueinander mittels der elektronischen Recheneinrichtung.

Somit kann auf Basis der unterschiedlichen Bestimmungen der Radwinkel zuverlässig der Radschlupf bestimmt werden und insbesondere eine Verifizierung der Ergebnisse der einzelnen Radwinkelsensoren durchgeführt werden. Sollte beispielsweise eine Abweichung eines zu erwartenden Radwinkels und des tatsächlich bestimmten Radwinkels erfolgen, so kann ein entsprechender Radschlupf bestimmt werden. Auf Basis des Radschlupfs kann wiederum ein entsprechendes Kalibrierungs- beziehungsweise Änderungssignal erzeugt werden, um den Radschlupf entsprechend bei der Auswertung zu berücksichtigen. Somit kann zuverlässig eine Position der Roboteranordnung bestimmt werden.

Bei der vorgestellten Roboteranordnung sind insbesondere der erste Roboterteil und der zweite Roboterteil über ein entsprechendes Gelenk, beispielsweise wie bei einem Radlader, verbunden. Insbesondere kann somit eine Art Knicklenkung zwischen dem ersten Roboterteil und dem zweiten Roboterteil ausgebildet sein. Grundsätzlich ist jedoch das Verfahren auch für ähnliche Geometrien, wie beispielsweise eine Ackermannlenkung oder eine Drehschemellenkung anwendbar.

Für solche Geometrien liegen bei bekanntem Knickwinkel Gamma und bekannten Raddrehgeschwindigkeiten redundante Informationen über den Fahrzeugzustand vor. Für jeden der beiden Fahrzeugteile, also für jeden Roboterteil, kann ohne Betrachtung von Schlupf der Räder über Integration der Radgeschwindigkeiten unabhängige Position x, y und Theta, welche insbesondere dem Lenkwinkel (also ein relativer Winkel des Roboterteils zu eine Umgebung) entspricht, berechnet werden. Da die beiden Roboterteile mechanisch über das Gelenk mit einem Freiheitsgrad Gamma, insbesondere mit zumindest einem rotatorischem Freiheitsgrad, gekoppelt sind, genügt die Position eines Wagenteils und des Knickwinkels. Die weiteren Informationen sind redundant. Alternativ könnte man auch ohne einen Sensor für den Knickwinkel über die Odometrie der beiden Roboterteile den Knickwinkel bestimmen.

In allen typischen Anwendungen tritt allerdings ein Schlupf an den Rädern auf, der je nach Reibwertpaarung/aktuellem Drehmoment und Drehgeschwindigkeit an den Rädern unterschiedlich ist. Die Idee ist, die redundanten Informationen somit auszunutzen, um die bei alleiniger Betrachtung der einzelnen Räder nicht vorhersehbaren Schlupfwerte zumindest zum Teil zu bestimmen.

Somit werden die redundanten Informationen bezüglich der unterschiedlichen Roboterteile genutzt, um eine Verifizierung der Raddrehgeschwindigkeit und somit auch den Radschlupf bestimmen zu können.

Gemäß einer vorteilhaften Ausgestaltungsform wird zusätzlich ein Knickwinkel zwischen dem ersten Roboterteil und dem zweiten Roboterteil auf Basis der erfassten Radwinkel bestimmt. Insbesondere kann der Knickwinkel an dem Gelenk auftreten. Auf Basis der unterschiedlichen Radwinkel kann insbesondere dann auch auf den Knickwinkel selbst geschlossen werden. Somit kann zuverlässig die Position der Roboteranordnung bestimmt werden.

Weiterhin vorteilhaft ist, wenn zusätzlich ein Knickwinkel zwischen dem ersten Roboterteil und dem zweiten Roboterteil mittels eines Knickwinkelsensors der Positionsbestimmungsvorrichtung bestimmt wird. Insbesondere bei Vorliegen des Knickwinkelsensors kann somit zuverlässig der Knickwinkel bestimmt werden und mittels des Knickwinkels kann somit zuverlässig auf den Radschlupf geschlossen werden. Somit ist eine zuverlässige Positionsbestimmung der Roboteranordnung ermöglicht.

In einer weiteren vorteilhaften Ausgestaltungsform ist vorgesehen, dass auf Basis der erfassten Radwinkel und/oder auf Basis des bestimmten Radschlupfes eine Position der Roboteranordnung bestimmt wird. Insbesondere kann eine Position relativ in einem Raum bestimmt werden. Insbesondere kann somit auf Basis von Odometrie die Position der Roboteranordnung bestimmt werden. Dadurch kann auf komplizierte Positionsbestimmungseinrichtungen verzichtet werden, da rein auf Basis der Odometriedaten inkrementell auf die Position der Roboteranordnung geschlossen werden kann.

Ebenfalls vorteilhaft ist, wenn auf Basis eines jeweiligen Radwinkels eine jeweilige Drehgeschwindigkeit eines jeweiligen Rades bestimmt wird. Beispielsweise kann dann auf Basis des Radwinkels die entsprechende Drehgeschwindigkeit des Rades bestimmt werden, wobei wiederum auf Basis der Drehgeschwindigkeit eine lineare Bewegung des Roboters beziehungsweise der Roboteranordnung bestimmt werden kann, was wiederum auf eine Position im Raum schließe lässt.

Dabei hat es sich weiterhin als vorteilhaft erwiesen, wenn ein jeweiliger Radius r eines jeweiligen Rades zum Bestimmen der Drehgeschwindigkeit berücksichtigt wird. Insbesondere wird somit auch der Radius des Rades berücksichtigt, da insbesondere die lineare Geschwindigkeit V der Roboteranordnung ebenfalls abhängig von dem Radius selbst ist. Hierzu kann insbesondere mittels der Formel:

$$V_{RL} = r \cdot \omega_{RL} \cdot (1 + \text{Schlupf}_{RL})$$

zurückgegriffen werden, wobei V die Lineargeschwindigkeit ist, r der Radius ist, $\omega$ dem Radwinkel entspricht und Schlupf dem Reibwert entspricht und dies beispielsweise für das hintere (R rear) linke (L left) Rad hier bestimmt wird.

Weiterhin vorteilhaft ist, wenn zum Bestimmen des Radschlupfes ein Kalmanfilter oder ein Lüneberger Beobachter genutzt wird. Somit kann insbesondere ein Beobachtermodell mit einer Zustandsschätzung verwendet werden. Hierbei handelt es sich um einfache Beobachter innerhalb der Regelungstechnik, welche somit auf einfache Art und Weise den Schlupf berechnen können.

Weiterhin vorteilhaft ist, wenn zum Bestimmen des Radschlupfes ein maschinelles Lernmodell verwendet wird. Insbesondere aufgrund der starken Nicht-Linearität bietet sich alternativ an, mittels eines maschinellen Lernalgorithmus, insbesondere mittels eines Deep Learning Verfahrens, beispielsweise mittels eines neuronalen Netzwerks, den entsprechenden Radschlupf zu ermitteln. Somit kann die Nicht-Linearität entsprechend vorteilhaft berücksichtigt werden.

Dabei hat es sich weiterhin als vorteilhaft erwiesen, wenn zum Anlernen des maschinellen Lernmodells Simulationsdaten und/oder Messdaten verwendet werden. Somit können sowohl im Feld aktiv erzeugte Messdaten verwendet werden. Sollten beispielsweise eine nicht genügende Anzahl an Messdaten vorhanden sein, so kann auch auf Simulationsdaten zurückgegriffen werden. Somit kann ein zuverlässiges Anlernen des maschinellen Lernmodells realisiert werden.

Ebenfalls vorteilhaft ist, wenn die Roboteranordnung als autonom betriebener mobiler Roboter bereitgestellt wird. Insbesondere wird somit die Roboteranordnung als AGV (Automated Guided Vehicle) bereitgestellt. Mit anderen Worten kann die Roboteranordnung selbstständig auf Basis einer Positionsbestimmung sich innerhalb einer vorgegebenen Umgebung bewegen und von einem ersten Ort zu einem zweiten Ort fahren. Auf Basis der verbesserten Positionsbestimmung kann nun auch ein verbesserter Betrieb des AGVs realisiert werden.

Es hat sich weiterhin als vorteilhaft erwiesen, wenn zusätzlich auf Basis einer optischen Erfassung eines Markers in einer Umgebung der Roboteranordnung eine Position der Roboteranordnung bestimmt wird. Somit kann die Positionsbestimmung entsprechend verifiziert werden und zusätzlich auf Basis der optischen Positionsbestimmung die Positionsbestimmung per Odometrie verbessert werden. Alternativ oder ergänzend kann beispielsweise auch auf Basis von satellitengestützter Navigation, radargestützter Navigation oder auch LIDARgestützter Positionsbestimmung eine entsprechende Verbesserung der Positionsbestimmung realisiert werden.

Ebenfalls vorteilhaft ist, wenn auf Basis des bestimmten Radschlupfes eine Radschlupfregelung angepasst wird. Sollte beispielsweise ein entsprechender Radschlupf bestimmt werden, so kann eine Radschlupfregelung initiiert werden, sodass zukünftig der Radschlupf verhindert wird. Insbesondere können somit entsprechende Steuersignale für die Radschlupfregelung erzeugt werden, wodurch ein verbesserter Betrieb der Roboteranordnung realisiert werden kann.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung daher auch ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch eine Positionsbestimmungsvorrichtung zum Bestimmen eines Radschlupfes von zumindest einem Rad einer Roboteranordnung, mit zumindest einem ersten Radwinkelsensor, einem zweiten Radwinkelsensor, einem dritten Radwinkelsensor, einem vierten Radwinkelsensor und einer elektronischen Recheneinrichtung, wobei die Positionsbestimmungsvorrichtung zum Durchführen eines Verfahrens nach dem vorhergehenden Aspekt ausgebildet ist. Insbesondere wird das Verfahren mittels der Positionsbestimmungsvorrichtung durchgeführt.

Ferner betrifft die Erfindung auch eine Roboteranordnung mit zumindest einem ersten Roboterteil, einem zweiten Roboterteil und einer Positionsbestimmungsvorrichtung nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, der Positionsbestimmungsvorrichtung sowie der Roboteranordnung anzusehen. Die Positionsbestimmungsvorrichtung sowie die Roboteranordnung weisen hierzu insbesondere gegenständliche Merkmale auf, um entsprechende Verfahrensschritte durchführen zu können.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:

FIG 1    eine schematische Draufsicht auf eine Ausführungsform einer Roboteranordnung mit einer Ausführungsform einer Positionsbestimmungsvorrichtung; und

FIG 2    ein schematisches Blockschaltbild gemäß einer Ausführungsform einer Positionsbestimmungsvorrichtung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

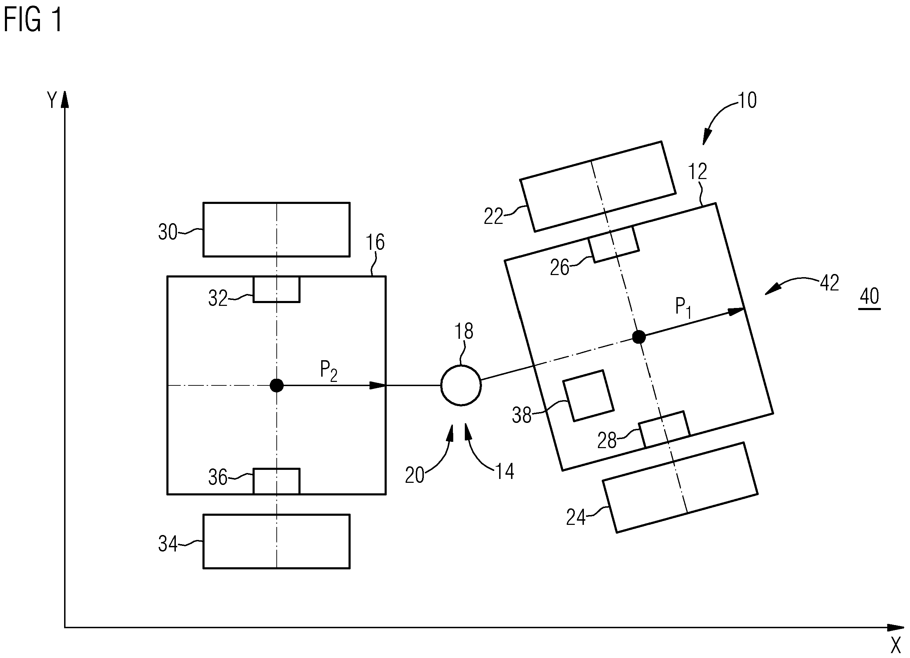

FIG 1 zeigt eine schematische Draufsicht auf eine Ausführungsform auf eine Roboteranordnung 10. Die Roboteranordnung 10 weist im folgenden Ausführungsbeispiel einen ersten Roboterteil 12 sowie über ein Gelenk 14 an dem ersten Roboterteil 12 angekoppelten zweiten Roboterteil 16 auf. Hierzu kann insbesondere vorgesehen sein, dass zwischen dem ersten Roboterteil 12 und dem zweiten Roboterteil 16 ein Knickwinkelsensor 18 zum Bestimmen eines Knickwinkels 20 bereitgestellt ist.

Ferner ist insbesondere vorgesehen, dass der erste Roboterteil 12 zumindest ein erstes Rad 22 und ein zweites Rad 24 aufweist. Die Räder 22, 24 können dabei insbesondere separat voneinander betrieben werden. An dem ersten Rad 22 ist ein erster Radwinkelsensor 26 ausgebildet. An dem zweiten Rad 24 ist ein zweiter Radwinkelsensor 28 ausgebildet.

Der zweite Roboterteil 16 weist ein drittes Rad 30 mit einem dazugehörigen dritten Radwinkelsensor 32 auf. Ferner weist der zweite Roboterteil 16 ein viertes Rad 34 mit einem dazugehörigen vierten Radwinkelsensor 36 auf. Die Räder 30, 34 können insbesondere auch separat zueinander betrieben werden.

Mit anderen Worten weist der erste Roboterteil 12 und der zweite Roboterteil 16 separate Antriebsmöglichkeiten auf.

Ferner ist vorliegend insbesondere gezeigt, dass eine Positionsbestimmungseinrichtung 42 zumindest eine elektronische Recheneinrichtung 38 aufweisen kann. Im vorliegenden Ausführungsbeispiel ist diese im ersten Roboterteil 12 ausgebildet. Dies ist jedoch rein beispielhaft und kann beispielsweise auch im zweiten Roboterteil 16 ausgebildet sein.

FIG 1 zeigt somit insbesondere, dass vorliegend ein Verfahren zum Bestimmen eines Radschlupfes von zumindest einem Rad 22, 24, 30, 34 vorgestellt werden kann. Dabei handelt es sich insbesondere um eine Radschlupfbestimmung mittels künstlicher Intelligenz (KI). Dabei erfolgt insbesondere das Erfassen eines ersten Radwinkels des ersten Rads 22 des ersten Roboterteils 12 mittels des ersten Radwinkelsensors 26 und das Erfassen eines zweiten Radwinkels des zweiten Rads 24 mittels des zweiten Radwinkelsensors 28. Ferner erfolgt das Erfassen des dritten Radwinkels des dritten Rads 30 mittels des dritten Radwinkelsensors 32 und das Erfassen eines vierten Radwinkels des vierten Rads 34 mittels des vierten Radwinkelsensors 36. Es erfolgt dann das Übermitteln der erfassten Radwinkel an die elektronische Recheneinrichtung 38 der Positionsbestimmungsvorrichtung 42 und das Bestimmen eines Radschlupfes an einem der vier Räder 22, 24, 30, 34 durch gegenseitiges Verifizieren der erfassten Radwinkel relativ zueinander mittels der elektronischen Recheneinrichtung 38.

Ferner zeigt die FIG 1, dass insbesondere zusätzlich der Knickwinkel 20 zwischen dem ersten Roboterteil 12 und dem zweiten Roboterteil 16 auf Basis der erfassten Radwinkel bestimmt werden kann. Alternativ oder ergänzend kann der Knickwinkelsensor 18 vorgesehen sein, um den entsprechenden Knickwinkel 20 bestimmen zu können.

Des Weiteren zeigt die FIG 1 insbesondere, dass auf Basis der erfassten Radwinkel und/oder auf Basis des bestimmten Radschlupfes eine Position P1, P2 bestimmt werden kann. Die vorliegende erste Position P1 ist dem ersten Roboterteil 12 zugeordnet, wobei dies insbesondere in x- und y-Koordinaten sowie in einem entsprechenden Lenkwinkel Theta1 beschrieben werden kann. Eine zweite Position P2 ist dem zweiten Roboterteil 16 zugeordnet, welches ebenfalls über entsprechende x-, y-Koordinaten und einem entsprechenden Lenkwinkel Theta2 verfügt. Beispielsweise kann im vorliegenden Ausführungsbeispiel der erste Lenkwinkel Theta1 unterschiedlich sein als der zweite Lenkwinkel Theta2 und somit ein entsprechender Knickwinkel 20 bestimmt werden. Beispielsweise kann der Knickwinkel 20 dann auch über die Differenz des ersten Lenkwinkels Theta1 und des zweiten Lenkwinkels Theta2 betrachtet werden.

Ferner zeigt die FIG 1 insbesondere, dass die Roboteranordnung als autonom betriebener mobiler Roboter bereitgestellt wird. Ebenfalls kann vorgesehen sein, dass zusätzlich auf Basis einer optischen Erfassung eines Markers in einer Umgebung 40 der Roboteranordnung 10 eine Position der Roboteranordnung 10 bestimmt werden kann. Ferner kann auf Basis des bestimmten Radschlupfes auch eine Radschlupfregelung angepasst werden.

Insbesondere kann dann auf Basis des bestimmten Radschlupfes ein neuronales Netzwerk angelernt werden, welches eine zuverlässige Positionsbestimmung durchführen kann.

Insbesondere sieht somit die Erfindung vor, dass ein Lösungsansatz für die vorgestellte Fahrzeuggeometrie mit Knicklenkung bereitgestellt wird. Grundsätzlich lässt sich das Verfahren aber auch für andere Geometrien, wie beispielsweise Ackermannlenkung oder eine Drehschemellenkung in gleicher Weise anwenden.

Für diese Geometrien liegen die bekannten Lenkwinkel Theta sowie die Raddrehgeschwindigkeit als redundante Informationen über den Fahrzeugzustand vor. Für jede der beiden Fahrzeugteile kann, insbesondere ohne Betrachtung von Schlupf der Räder, über die Integration der Radgeschwindigkeiten unabhängig die Position x, y, Theta berechnet werden. Da die beiden Teile mechanisch über das Gelenk 14 und somit den Knickwinkel 20 im Freiheitsgrad Gamma gekoppelt sind, genügt die Position eines Wagenteils und der entsprechende Lenkwinkel und des Knickwinkels 20. Die weiteren Informationen sind redundant. Alternativ könnte man auch ohne einen Knickwinkelsensor 18 für den Knickwinkel 20 über die Odometrie der beiden Roboterteile 12, 16 den Knickwinkel 20 berechnen.

In allen typischen Anwendungen tritt allerdings ein Schlupf an den Rädern 22, 24, 30, 34 auf, der je nach Reibwertpaarung/aktuellem Drehmoment und Drehgeschwindigkeit an den Rädern 22, 24, 30, 34 unterschiedlich ist. Die Idee ist, die redundanten Informationen auszunutzen, um die bei alleiniger Betrachtung der einzelnen Räder 22, 24, 30, 34 nicht vorhersehbaren Schlupfwerte zumindest zum Teil zu bestimmen.

Hierfür kann ein Beobachtermodell mit einer Zustandsschätzung verwendet werden, beispielsweise ein Lüneberger Beobachter oder ein Kalmanfilter.

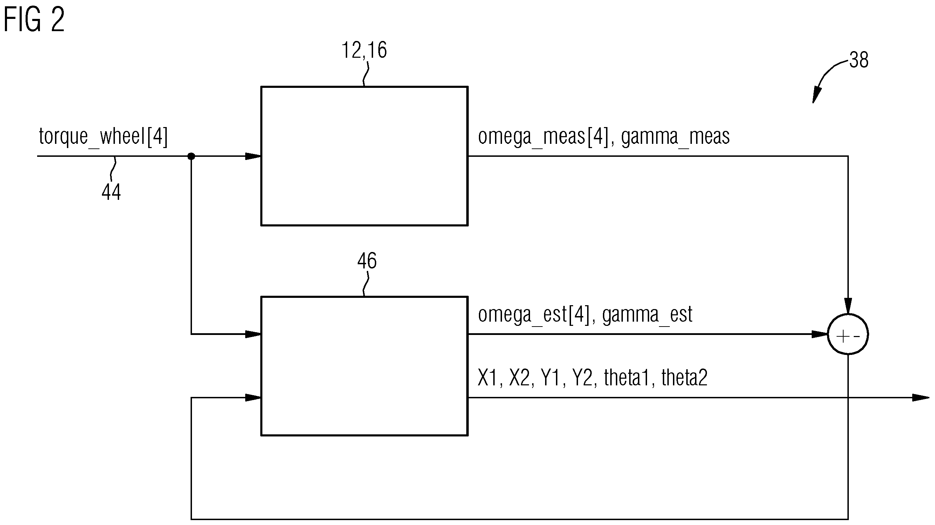

FIG 2 zeigt hierzu ein schematisches Blockschaltbild gemäß einer Ausführungsform der elektronischen Recheneinrichtung 38. Dabei kann beispielsweise als Eingangssignal ein Drehmoment 44 eines jeweiligen Rades 22, 24, 30, 34 dienen. Es erfolgt dann von den Roboterteilen 12, 16 eine tatsächliche Messung des Radwinkels sowie daraus der bestimmte Knickwinkel 20.

Das Drehmoment 44 geht dabei ebenfalls in ein mathematisches Modell 46 für die Roboteranordnung 10 ein. Das Ausgangssignal des mathematischen Modells 46 kann wiederum ein geschätzter Radwinkel sowie ein geschätzter Knickwinkel sein. In einem entsprechenden Plus-/Minusmodul werden die Informationen aus dem mathematischen Modell 46 und der Roboterteile 12, 16 miteinander verglichen. Diese werden zusätzlich nun wieder dem mathematischen Modell 46 rückgeführt. Als weiteres Ausgangssignal kann dann wiederum die entsprechende Position P1, P2 sowie deren Lenkwinkel Theta1 und Theta2 ausgegeben werden. Das mathematische Modell 46 kann insbesondere als maschinelles Lernmodell bereitgestellt werden.

Insbesondere aufgrund der starken Nicht-Linearität bietet es sich auch an, das mathematische Modell 46 mittels eines maschinellen Algorithmus, insbesondere mittels Deep Learning Verfahren, zu ermitteln. Die Trainingsdaten können hier sowohl Simulationsdaten als auch Messdaten sein.

Problem ist das nichtlineare Verhalten aufgrund von Radschlupf. Die Formel für beispielsweise das hintere linke Rad, insbesondere im vorliegenden Ausführungsbeispiel das dritte Rad 30, zeigt das Problem auf:

$$V_{RL} = r * \omega_{RL} * (1 + \text{Schlupf}_{RL})$$

Ein Zusammenhang von Raddrehzahl und Linearbewegung ist durch den Radradius r und den Schlupf bestimmt. Das Ergebnis geht dann in die Berechnung für die Radodometrie ein und kann zusätzlich für eine Radschlupfregelung verwendet werden, die ein Durchdrehen der Räder 22, 24, 30, 34 verhindern kann.

Bezugszeichenliste

| | |
|---|---|
| 10 | Roboteranordnung |
| 12 | erster Roboterteil |
| 14 | Gelenk |
| 16 | zweiter Roboterteil |
| 18 | Knickwinkelsensor |
| 20 | Knickwinkel |
| 22 | erstes Rad |
| 24 | zweites Rad |
| 26 | erster Radwinkelsensor |
| 28 | zweiter Radwinkelsensor |
| 30 | drittes Rad |
| 32 | dritter Radwinkelsensor |
| 34 | viertes Rad |
| 36 | vierter Radwinkelsensor |
| 38 | elektronische Recheneinrichtung |
| 40 | Umgebung |
| 42 | Positionsbestimmungsvorrichtung |
| 44 | Drehmoment |
| 46 | mathematisches Modell |

**Patentansprüche**

1. Verfahren zum Bestimmen eines Radschlupfes von zumindest einem Rad (22, 24, 30, 34) einer Roboteranordnung (10) mittels einer Positionsbestimmungsvorrichtung (42), mit den Schritten:

   - Erfassen eines ersten Radwinkels eines ersten Rads (22) eines ersten Roboterteils (12) der Roboteranordnung (10) mittels eines ersten Radwinkelsensors (26) der Positionsbestimmungsvorrichtung (42);
   - Erfassen eines zweiten Radwinkels eines zweiten Rads (24) des ersten Roboterteils (12) mittels eines zweiten Radwinkelsensors (28) der Positionsbestimmungsvorrichtung (42);
   - Erfassen eines dritten Radwinkels eines dritten Rads (30) eines zweiten Roboterteils (16) der Roboteranordnung (10) mittels eines dritten Radwinkelsensors (32) der Positionsbestimmungsvorrichtung (42), wobei der erste Roboterteil (12) und der zweite Roboterteil (16) über ein Gelenk (14) miteinander verbunden sind;
   - Erfassen eines vierten Radwinkels eines vierten Rads (34) des zweiten Roboterteils (16) mittels eines vierten Radwinkelsensors (36) der Positionsbestimmungsvorrichtung (42);
   - Übermitteln der erfassten Radwinkel an eine elektronische Recheneinrichtung (38) der Positionsbestimmungsvorrichtung (42); und
   - Bestimmen eines Radschlupfes an einem der vier Räder (22, 24, 30, 34) durch gegenseitiges Verifizieren der erfassten Radwinkel relativ zueinander mittels der elektronischen Recheneinrichtung (38).

2. Verfahren nach Anspruch 1, **dadurch gekennzeichnet, dass** zusätzlich ein Knickwinkel (20) zwischen dem ersten Roboterteil (12) und dem zweiten Roboterteil (16) auf Basis der erfassten Radwinkel bestimmt wird.

3. Verfahren nach Anspruch 1 oder 2, **dadurch gekennzeichnet, dass** zusätzlich ein Knickwinkel (20) zwischen dem ersten Roboterteil (12) und dem zweiten Roboterteil (16) mittels eines Knickwinkelsensors (18) der Positionsbestimmungsvorrichtung (42) bestimmt wird.

4. Verfahren nach einem der vorhergehenden Ansprüche, **dadurch gekennzeichnet, dass** auf Basis der erfassten Radwinkel und/oder auf Basis des bestimmten Radschlupfes eine Position der Roboteranordnung (10) bestimmt wird.

5. Verfahren nach Anspruch 4, **dadurch gekennzeichnet, dass** auf Basis eines jeweiligen Radwinkels eine jeweilige Drehgeschwindigkeit eines jeweiligen Rades (22, 24, 30, 34) bestimmt wird.

6. Verfahren nach Anspruch 5, **dadurch gekennzeichnet, dass** ein jeweiliger Radius eines jeweiligen Rades (22, 24, 30, 34) zum Bestimmen der Drehgeschwindigkeit berücksichtigt wird.

7. Verfahren nach einem der vorhergehenden Ansprüche, **dadurch gekennzeichnet, dass** zum Bestimmen des Radschlupfes ein Kalmanfilter oder ein Lünberger Beobachter genutzt wird.

8. Verfahren nach einem der Ansprüche 1 bis 6, **dadurch gekennzeichnet, dass** zum Bestimmen des Radschlupfes ein maschinelles Lernmodell verwendet wird.

9. Verfahren nach Anspruch 8, **dadurch gekennzeichnet, dass** zum Anlernen des maschinellen Lernmodells Simulationsdaten und/oder Messdaten verwendet werden.

10. Verfahren nach einem der vorhergehenden Ansprüche, **dadurch gekennzeichnet, dass** die Roboteranordnung (10) als autonom betriebener mobiler Roboter bereitgestellt wird.

11. Verfahren nach einem der vorhergehenden Ansprüche, **dadurch gekennzeichnet, dass** zusätzlich auf Basis einer optischen Erfassung eines Markers in einer Umgebung (40) der Roboteranordnung (10) eine Position der Roboteranordnung (10) bestimmt wird.

12. Verfahren nach einem der vorhergehenden Ansprüche, **dadurch gekennzeichnet, dass** auf Basis des bestimmten Radschlupfes eine Radschlupfregelung angepasst wird.

13. Computerprogrammprodukt mit Programmcodemitteln, welche eine elektronische Recheneinrichtung (38) dazu veranlassen, wenn die Programmcodemittel von der elektronischen Recheneinrichtung (38) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Positionsbestimmungsvorrichtung (42) zum Bestimmen eines Radschlupfes von zumindest einem Rad (22, 24, 30, 34) einer Roboteranordnung (10), mit zumindest einem ersten Radwinkelsensor (26), einem zweiten Radwinkelsensor (28), einem dritten Radwinkelsensor (32), einem vierten Radwinkelsensor (26) und einer elektronischen Recheneinrichtung (38), wobei die Positionsbestimmungsvorrichtung (42) zum Durchführen eines Verfahrens nach einem der Ansprüche 1 bis 12 ausgebildet ist.

FIG 1

EP 4 614 271 A1

FIG 2

Europäisches
Patentamt

European
Patent Office

Office européen
des brevets

# EUROPÄISCHER RECHERCHENBERICHT

Nummer der Anmeldung

EP 24 16 1072

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/355860 A1 (RYDSTRÖM MATS [SE] ET AL) 10. November 2022 (2022-11-10) | 1-6,10, 12-15 | INV. G05D1/24 |
| Y | * Absatz [0011] - Absatz [0063] * ----- | 7-9,11 | |
| Y | US 2023/227104 A1 (PANDEY GAURAV [US] ET AL) 20. Juli 2023 (2023-07-20) * Absatz [0040] - Absatz [0097] * ----- | 7-9,11 | |
| A | US 2024/067510 A1 (ULBRICH STEFAN [DE] ET AL) 29. Februar 2024 (2024-02-29) * Absatz [0111] - Absatz [0185] * ----- | 1-13 | |

RECHERCHIERTE
SACHGEBIETE (IPC)

G05D

Der vorliegende Recherchenbericht wurde für alle Patentansprüche erstellt

| Recherchenort | Abschlußdatum der Recherche | Prüfer |
|---|---|---|
| München | 16. August 2024 | Coda, Ruggero |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 1072

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-08-2024

| Im Recherchenbericht angeführtes Patentdokument | Datum der Veröffentlichung | Mitglied(er) der Patentfamilie | Datum der Veröffentlichung |
|---|---|---|---|
| US 2022355860 A1 | 10-11-2022 | CN 115303384 A | 08-11-2022 |
| | | EP 4086147 A1 | 09-11-2022 |
| | | US 2022355860 A1 | 10-11-2022 |
| US 2023227104 A1 | 20-07-2023 | DE 102023100546 A1 | 20-07-2023 |
| | | US 2023227104 A1 | 20-07-2023 |
| US 2024067510 A1 | 29-02-2024 | CN 114930263 A | 19-08-2022 |
| | | DE 102020006337 A1 | 15-04-2021 |
| | | EP 3887917 A1 | 06-10-2021 |
| | | EP 4239430 A1 | 06-09-2023 |
| | | EP 4249421 A2 | 27-09-2023 |
| | | US 2024067510 A1 | 29-02-2024 |
| | | WO 2021069674 A1 | 15-04-2021 |

EPO FORM P0461

Für nähere Einzelheiten zu diesem Anhang : siehe Amtsblatt des Europäischen Patentamts, Nr.12/82